# EUROPÄISCHE PATENTANMELDUNG

(11) **EP 4 272 558 A1**
(43) Veröffentlichungstag der Anmeldung: **08.11.2023**
(21) Anmeldenummer: 23154183.0
(22) Anmeldetag: 31.01.2023
(51) Int. Cl.: A21C 9/00, A47J 43/28

(54) **TEIGSCHABER MIT KNICK**

(30) Priorität: 03.05.2022 DE 202022001065 U
(71) Anmelder: Mutz, Alfred, 45134 Essen (DE)
(72) Erfinder: Mutz, Alfred, 45134 Essen (DE)

(57) **Zusammenfassung**

Bei dem Teigschaber mit Knick handelt es sich um einen Teigschaber mit einem Knick im Schaberteil.

Nur durch den Knick (ca. 15 - 90 Grad, je nach Ausführung) kann der Inhalt eines Gefäßes vom Boden des Gefäßes hin zur Öffnung herausgeschoben werden.

Durch den Knick wird der erforderliche Winkel erreicht, um effizient und einfach das Gefäß zu entleeren. Dies ist besonders für die Leerung von hochwandigen und relativ engen Gefäßen geeignet. Der Schaber besteht aus einem gummi-/siliconartigen Material mit einem festen Stiel.
1 Fester Stiel aus Holz, Kunstoff oder einem anderen geeigneten Material
2 Schaber aus Gummi, Silicon oder einem anderen geeigneten Material
3 Knick, ca. 15° - 90°

## Beschreibung

### Bezugszeichenliste

1. Fester Stiel aus Holz, Kunstoff oder einem anderen geeigneten Material
2. Schaber aus Gummi, Silicon oder einem anderen geeigneten Material
3. Knick, ca. 15° - 90°

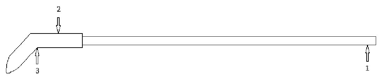

## Patentansprüche

1. Der besondere Schutzanspruch des Teigschabers ist durch den Knick im Schaber gekennzeichnet.
